# EUROPEAN PATENT SPECIFICATION

(11) **EP 4 177 011 B1**
(45) Date of publication and mention of the grant of the patent: **05.06.2024**
(21) Application number: 21206671.6
(22) Date of filing: 05.11.2021
(51) Int. Cl.: B25G 1/10, B26B 23/00

(54) **AXE AND A METHOD FOR MANUFACTURING AN AXE**
AXT UND VERFAHREN ZUR HERSTELLUNG EINER AXT
HACHE ET PROCÉDÉ DE FABRICATION D'UNE HACHE

(43) Date of publication of application: 10.05.2023
(73) Proprietor: Fiskars Finland Oy Ab, 02150 Espoo (FI)
(72) Inventor: Kemppi, Mikko, 02150 Espoo (FI); Riikonen, Jouni, 02150 Espoo (FI); Kunnas, Kari, 02150 Espoo (FI)
(74) Representative: Kolster Oy Ab

(56) References cited:
- EP-A1- 1 438 917
- EP-A1- 1 894 681
- DE-U1-202010 016 685
- US-A- 4 418 732
- US-A- 5 425 176
- US-A1- 2007 131 061
- US-A1- 2008 302 214
- US-A1- 2010 319 496
- US-A1- 2017 001 292
- US-A1- 2020 130 165
- US-B1- 9 021 642
- US-B1- 10 464 198

## Description

### BACKGROUND OF THE INVENTION

### FIELD OF THE INVENTION

This invention relates to an axe and to a method for manufacturing an axe.

### DESCRIPTION OF PRIOR ART

Previously there are known axes that have axe heads connected to axe handles. In these known solutions the axe handle has either a straight profile and/or is solid. The known solutions of axe handles are focused on securing the grip of the user with various configurations of widenings, protrusions, recesses, and surface materials, instead of the ergonomics of the user's grip viewed in light of the user's wrist position.

The above mentioned known axes are traditionally manufactured by inserting a separately manufactured straight handle through a hole in an axe head, thus securing said parts together. These separately manufactured handles are traditionally manufactured by i.e. carving wood, casting metal, or injection molding plastic. Known ways to utilize above mentioned manufacturing methods in axe handle manufacturing either restrict the shape of the handle, or the construct of the handle forcing the handle to be solid.

A disadvantage with an axe handle as described above is that a straight handle forces the user's wrist to be in a disadvantaged position when using the axe. This can make the use of the axe less efficient or cause unnecessary stress on the user's body when frequently used over a long period of time. Additionally, the weight of solid axe handles makes the axe less user friendly and less portable. Also, the manufacture of a solid axe handle requires more raw materials, and increases the throughput time of the process.

Previously known axes are disclosed in patent publications US4418732A1, US20080302214A1, US5425176A1, US9021642B1, US10464198B1, US20170001292A1, US2020130165A1, EP1438917A1, US20100319496A1, EP1894681A1, US20070131061A1, and DE202010016685U1, for instance.

### SUMMARY OF THE INVENTION

An object of the present invention is to solve the above mentioned disadvantages and to provide an axe which has excellent properties during use and is easy to manufacture reliably. These and other objects are achieved with an axe according to independent claim 1 and with a manufacturing method according to independent claim 10.

When the gripping end of an axe handle comprises a tubular curved portion according to the characterizing part of the independent claim 1, the gripping end is in an advantageous position for use resulting in improved usability and ergonomics.

Preferred embodiments of the invention are disclosed in the dependent claims.

### BRIEF DESCRIPTION OF DRAWINGS

In the following the present invention will be described in closer detail by way of example and with reference to the attached drawings, in which
Figure 1 illustrates a perspective view of an embodiment of the invention,
Figure 2 illustrates a back view of the embodiment of figure 1,
Figure 3 illustrates a side view of the cross section B-B of the Figure 2,
Figure 4 illustrates a side view of the embodiment of figure 1,
Figure 5 illustrates a back view of the cross section A-A of the Figure 4,
Figure 6 illustrates a back view of the embodiment of figure 1, with a curved core still inside the handle, and
Figure 7 illustrates a side view of the cross-section B-B of the figure 6.
Figure 8 illustrates a flowchart of an example method for manufacturing an axe.

### DESCRIPTION OF AT LEAST ONE EMBODIMENT

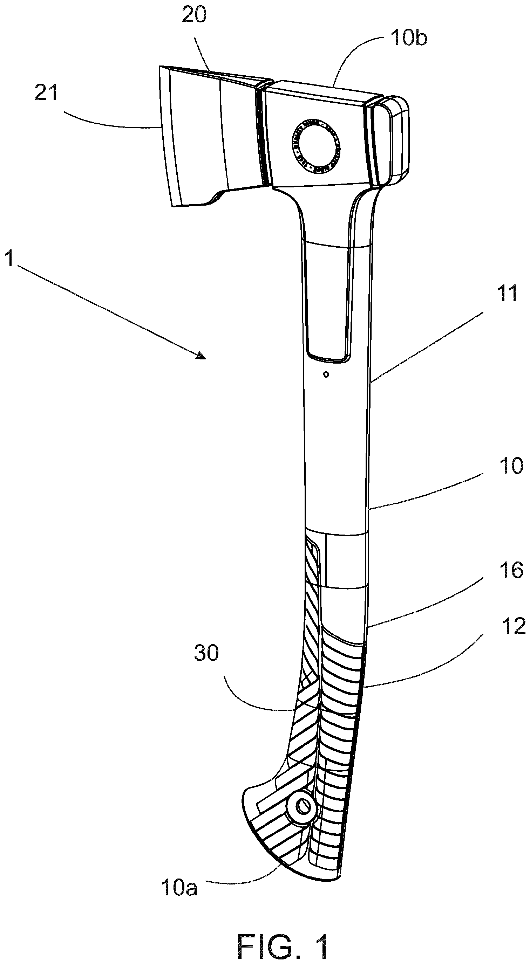

Figures 1 to 5 illustrate an embodiment of an axe 1 comprising a handle 10 with a first gripping end 10a, and an axe head 20 in a second end 10b of the handle 10, the axe head 20 comprising an edge 21 defining the striking direction of the axe 1. The edge 21 and the striking direction further define a striking plane, in respect to which the axe 1 is preferably symmetrical. The handle 10 further comprises a straight tubular portion 11 comprising a filling, and a curved tubular portion 12 which is curved on the striking plane defined by the striking direction of the axe 1. The curvature of the curved tubular portion 12 is in the striking plane and preferably towards the striking direction. Consequently, the curved tubular portion extends from the straight tubular portion 11 as a curve towards the striking direction. The tubularity of the curved portion 12 without a filling allows the axe 1 to be lighter, and the curvature of the curved portion 12 allows the user to grip the handle 10 with a more advantageous wrist position. Another advantage of the curved tubular portion 12 is that the center of gravity of the axe 1 is moved further along the handle 10 of the axe 1 towards the axe head 20 making the axe more efficient and more maneuverable.

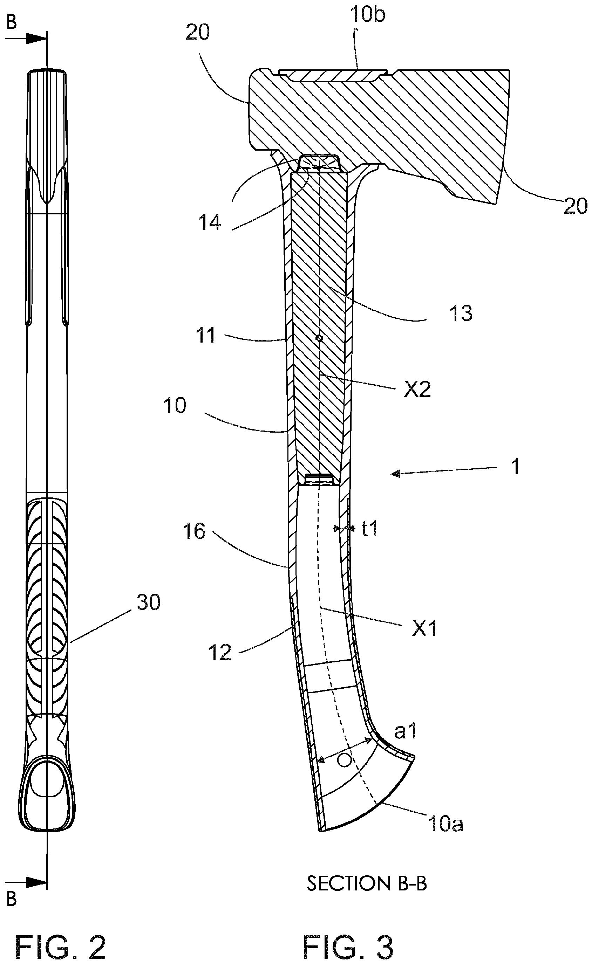

In the embodiment of figures 1 to 5, the filling of the straight tubular portion 11 is formed with a filling part 13 visible in figures 3, 5, and 7, which filling part 13 is separate and premade. Alternatively, instead of using a separate filling part 13, the filling may also be filled during the manufacture process of the handle 10 using the same material as the material of the handle 10. However, using a separate pre-fabricated filling part 13 is advantageous for surface quality of the handle 10, as it allows the tubular portions of the handle 10 to have a substantially constant wall thickness t1. The curing time of the handle 10 is also shortened when a separate filling part 13 is used, as there is no need to wait for the filling to be cured. Additionally, as the filling part 13 remains hidden in regular use, waste material left over from other manufacturing may be used as the raw material for the filling part 13.

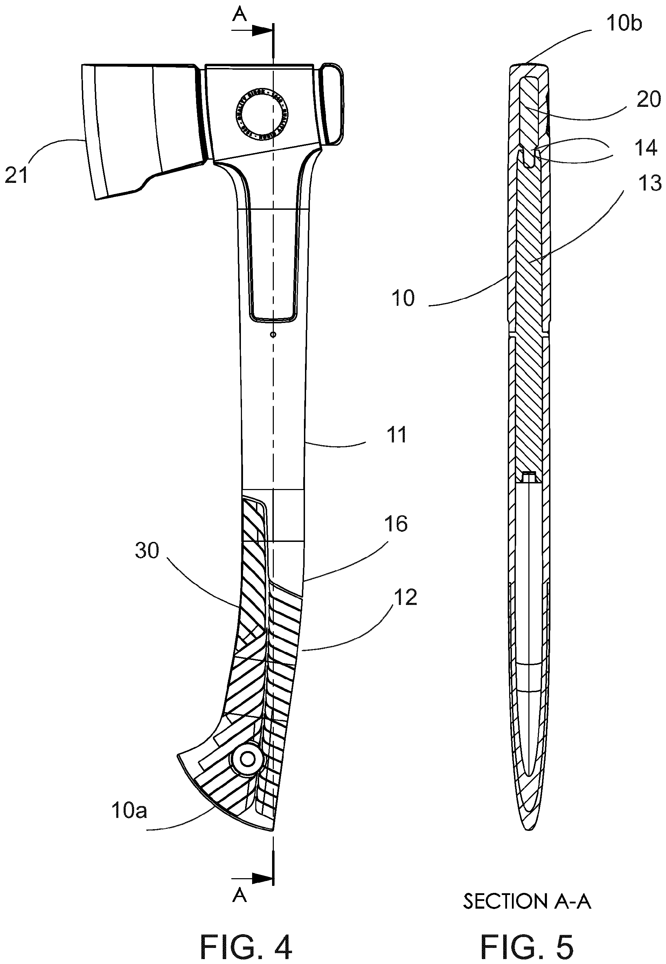

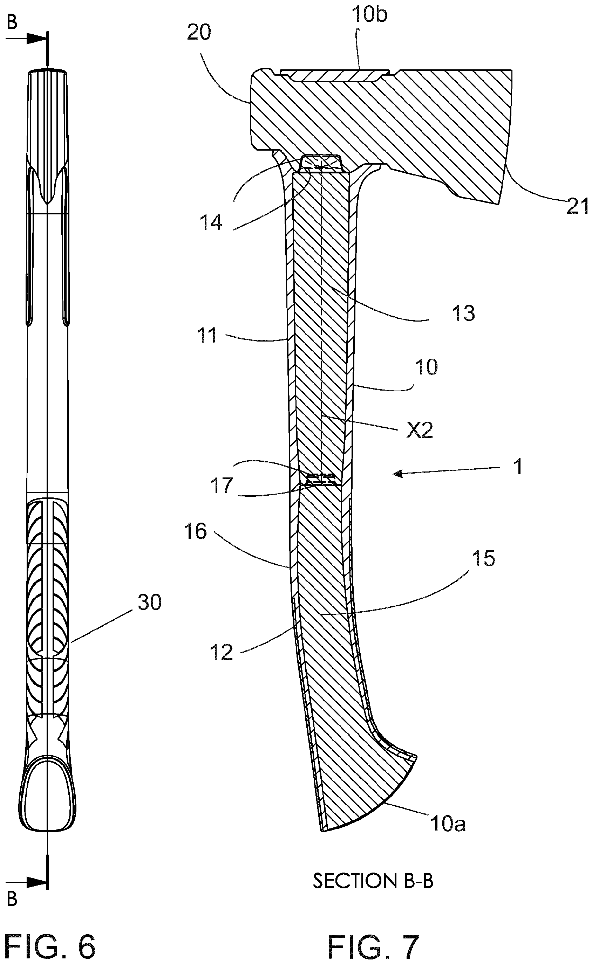

In the embodiment of figures 1 to 5 said filling part 13 is positioned relative to the axe head 20 with mating positioning elements visible in figures 3, 5, and 7. In the embodiment the mating positioning elements are particularly compatible recess/protrusion elements delimiting relative movement of said parts. The filling part 13 having a recess receiving a protrusion of the axe head 20 visible in figure 5, restricting relative sideways movement of the parts, in respect to the striking plane. Respectively, as is visible in cross section B-B in figures 3 and 7, the axe head 20 has a recess into which the filling part 13 protrudes, restricting the relative movement of the parts in striking direction. Other positioning elements may also be used such as conical elements or other generally known ways of aligning parts. These positioning elements allow the subparts to be easily positioned in accurate positions when the axe 1 is manufactured, making the process faster, more efficient, and more accurate.

In the embodiment of figures 1 to 5, the filling part 13 is solid, which is visible in figures 3, 5, and 7. Advantages of using a solid filling part 13 is its ease of manufacture. Alternatively, the filling part 13 may have a hollow construct or have an infill. Such filling parts 14 with a hollow structure or an infill can be manufactured with for example additive manufacturing. These options would reduce the weight of the filling part 13, and thus reduce the weight of the axe 1.

In the embodiment of figures 1 to 5, the tubular curved portion 12 comprises a section with a substantially constant wall thickness. Optionally, the wall thickness of all tubular portions of the handle 10 may have a substantially constant wall thickness. The more constant the wall thickness, the more evenly the handle 10 is cured, thus increasing quality of the handle 10.

In the embodiment of figures 1 to 5, the top line 16 of the curved portion 12 at least partially follows a circular path on said striking plane defined by the striking direction of the axe 1. The curvature of the top line 16 allows the wrist to be set in a natural position when grabbing the axe 1, as the wrist sits on the top line 16 when the axe 1 is used. Top line in this context means the side of the axe handle 10, which faces away from the striking direction, and is on top when the axe is struck when the edge 21 of the axe head 20 faces down. Additionally, this following of the circular path makes it easier to design and manufacture accurately the curved molds and cores used for manufacturing the axe 1. The angle between the first gripping end 10a of the handle 10 and the straight tubular portion 11 of the handle 10, formed by the curvature, is preferably between 1° and 15°, more preferably between 5° and 11°, and most preferably 8°.

In the embodiment of figures 1 to 5, the curved tubular portion 12 is hollow and an inner area a1 of the hollow curved tubular portion 12 of the handle 10 perpendicular to a longitudinal center axis X1 of the curved tubular portion 12 increases towards the first gripping end 10a of the handle 10. This creates sort of a backstop for the handle 10 without needing to increase the wall thickness of the hollow curved tubular portion 12. This backstop decreases the chance of the handle 10 slipping from the user's hand when using the axe 1.

In the embodiment of figures 1 to 5, the second end 10b of the handle 10 partially surrounds the axe head 20 in a longitudinal direction X2 of the straight tubular portion 11 of the axe 1, such that it delimits relative movement of said parts in said longitudinal direction X2. In other words, the second end 10b of the handle 10 is provided with an opening, and the axe head 20 protrudes through the opening. This allows the handle 10 to be manufactured around the axe head 20 with i.e. injection molding, instead of manufacturing said parts separately and then connecting said parts together.

In the embodiment of figures 1 to 5, the curved portion 12 comprises a surface portion 30. The surface portion 30 enhances the comfort of the handle 10 and improves the grip of the user. The surface portion 30 is preferably softer than rest of the handle 10. The surface portion 30 may also further comprise surface texture, particularly in form or recesses or protrusions in order to improve the grip and to reduce the possibility of the user's hand slipping when using the axe 1.

The material of the handle 10 is preferably a polyamide (PA) reinforced with 30-40% glass fiber.

The material of the filling or filling part 13 is preferably manufactured of similar polyamide (PA) with 30-40% glass fiber as the handle 10 of the axe. This is advantageous as it provides increased adhesion between the filling and the handle 10. Other materials may also be used such as poly propane, available as waste plastic, for instance.

The material of the axe head 20 may be carbon steel, for instance. However, other axe head materials such as stainless steel may also be used.

The material of the surface part is preferably a thermoplastic elastomer (TPE), in particular styrene-ethylene-butylene-styrene (SEBS).

The axe 1 may be an axe intended for one-handed use. Such axes are generally smaller, than axes intended for two-handed use. In axes mainly intended for one-handed use, this curvature of the handle 10 is especially advantageous as it is the sole contact point between the user and the axe when the axe 1 is used.

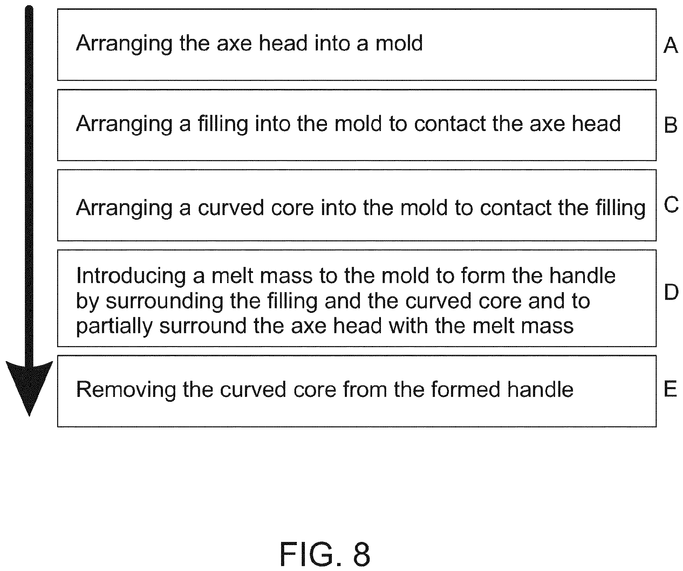

Figure 8 illustrates a flow chart of an embodiment of a manufacturing method for manufacturing an axe 1. This method may be implemented for manufacturing the axe illustrated in Figures 1-7, for instance. For instance, an injection molding machine can be used for executing the manufacturing steps. The embodiment method comprises steps of A arranging the axe head 20 into a mold, arranging B a filling into the mold to contact the axe head 20, arranging C a curved core 15 into the mold to contact the filling, introducing D a melt mass to the mold to form the handle 10 by surrounding the filling and the curved core 15 and to partially surround the axe head 20 with the melt mass. And removing E the curved core 15 from the formed handle 10 once the handle 10 is cured. With these steps an improved axe can be easily manufactured, with high quality and repeatability of the process.

The first steps illustrated in the flow chart requires a premade axe head 20, a mold for the axe 1, either arranging a suitable filling or providing a premade filling part 13, and a curved core 15. These required parts are then inserted to the mold accordingly into correct positions. Once the parts are in position inside the mold, the mold can be filled with the melt mass to fill the void spaces between the mold and the parts inside the mold. Once the mold has been filled, the axe 1 is allowed to cure before opening the mold and removing the axe 1 from the mold.

Preferably, the curved core 15 is removed by extracting the curved core 15 from the mold in a curved path corresponding with the curvature of the curved core 15.

Preferably if a filling part 13 is used, the filling part 13 and axe head 20 are shaped to have compatible positioning elements improving the accuracy and throughput time of the manufacturing method, and to make sure the parts are aligned correctly. The filling part 13 may be locked to the axe head 20 with said positioning elements.

Optionally, also the curved core 15 and the filling may have compatible positioning elements improving the accuracy and throughput time of the manufacturing method, and to make sure the parts are aligned correctly. Correspondingly, the curved core 15 may be locked to the filling with said positioning elements.

Preferably, the mold and the curved core 15 are dimensioned to mutually obtain a wall thickness in at least a part of the curved portion 12. This dimensioning ensures that the properties of the axe 1 are as intended, and that the curing of the handle 10 is even.

## Claims

1. An axe (1) comprising:
a handle (10) with a first gripping end (10a), and
an axe head (20) in a second end (10b) of the handle (10), the axe head (20) comprising an edge (21),
wherein the handle (10) further comprises:
a straight tubular portion (11) comprising a filling, and
a curved tubular portion (12)
**characterized in that** the curved tubular portion (12) is hollow and an inner area (a1) of the hollow curved tubular portion (12) of the handle (10) perpendicular to a longitudinal center axis (X1) of the curved tubular portion (12) increases towards the first gripping end (10a) of the handle (10).

2. The Axe according to claim 1, wherein the filling is formed with a filling part (13).

3. The axe according to claim 2, wherein said filling part (13) is positioned relative to the axe head (20) with mating positioning elements (14), particularly compatible recess/protrusion elements delimiting relative movement of said parts.

4. The axe according to claim 2 or 3, wherein the filling part (13) is solid.

5. The axe according to any one of the preceding claims, wherein the curved tubular portion (12) comprises a section with a substantially constant wall thickness (t1).

6. The axe (1) according to any one of the preceding claims, wherein the edge (21) of the axe head (20) faces a striking direction of the axe and the curved tubular portion (12) extends from the straight tubular portion (11) as a curve towards the striking direction.

7. The axe according to claim 6, wherein the top line (16) of the curved tubular portion (12) at least partially follows a circular path.

8. The Axe according to any one of the preceding claims, wherein the second end (10b) of the handle (10) partially surrounds the axe head (20) in a longitudinal direction (X2) of the straight tubular portion (11) of the axe (1), such that it delimits relative movement of said parts in said longitudinal direction (X2).

9. The axe according to any of the preceding claims, wherein the curved tubular portion comprises (12) a surface portion (30).

10. A method for manufacturing the axe (1), the method comprising:
arranging (A) the axe head (20) into a mold,
**characterized in that** the method further comprises:
arranging (B) a filling into the mold to contact the axe head (20),
arranging (C) a curved core (15) into the mold to contact the filling,
introducing (D) a melt mass to the mold to form a handle (10) by surrounding the filling and the curved core (15) and to partially surround the axe head (20) with the melt mass, and
removing (E) the curved core (15) from the formed handle (20).

11. The method according to claim 10, comprising
utilizing a filling part (13) as the filling,
shaping the filling part (13) and the axe head (20) to have compatible positioning elements (14), and
locking the filling part (13) to the axe head with the positioning elements (14).

12. The method according to one of claims 10 or 11, comprising
shaping the curved core (15) and the filling to have compatible positioning elements (17), and
locking the curved core (15) to the filling for positioning the curved core (15) in the mold.

13. The method according to any one of the preceding claims from 10 to 12, comprising
dimensioning the mold and the curved core (15) mutually to obtain a constant wall thickness (t1) in at least a part of the curved tubular portion (12).

## Patentansprüche

1. Axt (1), umfassend:
einen Griff (10) mit einem ersten Greifende (10a), und
einen Axtkopf (20) in einem zweiten Ende (10b) des Griffs (10), wobei der Axtkopf (20) eine Schneide (21) umfasst,
wobei der Griff (10) ferner umfasst:
einen geraden rohrförmigen Abschnitt (11), der eine Füllung umfasst, und
einen gekrümmten rohrförmigen Abschnitt (12),
**dadurch gekennzeichnet, dass** der gekrümmte rohrförmige Abschnitt (12) hohl ist und eine Innenfläche (a1) des hohlen gekrümmten rohrförmigen Abschnitts (12) des Griffs (10) senkrecht zu einer Längsmittelachse (X1) des gekrümmten rohrförmigen Abschnitts (12) hin zum ersten Greifende (10a) des Griffs (10) zunimmt.

2. Axt nach Anspruch 1, wobei die Füllung mit einem Füllungsteil (13) gebildet ist.

3. Axt nach Anspruch 2, wobei der Füllungsteil (13) in Bezug auf den Axtkopf (20) mit ineinandergreifenden Positionierungselementen (14), insbesondere zusammenpassenden Vertiefungs/Vorsprungselementen, die relative Bewegung der Teile abgrenzen, positioniert ist.

4. Axt nach Anspruch 2 oder 3, wobei der Füllungsteil (13) massiv ist.

5. Axt nach einem der vorhergehenden Ansprüche, wobei der gekrümmte rohrförmige Abschnitt (12) eine Sektion mit im Wesentlichen konstanter Wanddicke (t1) umfasst.

6. Axt (1) nach einem der vorhergehenden Ansprüche, wobei die Schneide (21) des Axtkopfs (20) einer Schlagrichtung der Axt zugewandt ist und der gekrümmte rohrförmige Abschnitt (12) sich von dem geraden rohrförmigen Abschnitt (11) als eine Krümmung hin zur Schlagrichtung erstreckt.

7. Axt nach Anspruch 6, wobei die obere Linie (16) des gekrümmten rohrförmigen Abschnitts (12) zumindest teilweise einem kreisförmigen Weg folgt.

8. Axt nach einem der vorhergehenden Ansprüche, wobei das zweite Ende (10b) des Griffs (10) den Axtkopf (20) in einer Längsrichtung (X2) des geraden rohrförmigen Abschnitts (11) der Axt (1) teilweise umgibt, derart dass es relative Bewegung der Teile in der Längsrichtung (X2) abgrenzt.

9. Axt nach einem der vorhergehenden Ansprüche, wobei der gekrümmte rohrförmige Abschnitt einen Oberflächenabschnitt (30) umfasst (12).

10. Verfahren zur Herstellung der Axt (1), wobei das Verfahren umfasst:
Anordnen (A) des Axtkopfs (20) in einer Form,
**dadurch gekennzeichnet, dass** das Verfahren ferner umfasst:
Anordnen (B) einer Füllung in der Form zum Berühren des Axtkopfs (20),
Anordnen (C) eines gekrümmten Kerns (15) in der Form zum Berühren der Füllung,
Einführen (D) einer Schmelzmasse in die Form zum Bilden eines Griffs (10) durch Umgeben der Füllung und des gekrümmten Kerns (15) und zum partiellen Umgeben des Axtkopfs (20) mit der Schmelzmasse, und
Entfernen (E) des gekrümmten Kerns (15) von dem gebildeten Griff (20).

11. Verfahren nach Anspruch 10, das umfasst:
Verwenden eines Füllungsteils (13) als die Füllung,
Formen des Füllungsteils (13) und des Axtkopfs (20), um zusammenpassende Positionierungselemente (14) aufzuweisen, und
Verriegeln des Füllungsteils (13) an dem Axtkopf mit den Positionierungselementen (14).

12. Verfahren nach einem der Ansprüche 10 oder 11, das umfasst:
Formen des gekrümmten Kerns (15) und der Füllung, um zusammenpassende Positionierungselemente (17) aufzuweisen, und
Verriegeln des gekrümmten Kerns (15) an der Füllung zum Positionieren des gekrümmten Kerns (15) in der Form.

13. Verfahren nach einem der vorhergehenden Ansprüche 10 bis 12, das umfasst:
gegenseitiges Bemessen der Form und des gekrümmten Kerns (15), um eine konstante Wanddicke (t1) in zumindest einem Teil des gekrümmten rohrförmigen Abschnitts (12) zu erhalten.

## Revendications

1. Hache (1) comprenant :
un manche (10) avec une première extrémité de préhension (10a), et
une tête de hache (20) dans une seconde extrémité (10b) du manche (10), la tête de hache (20) comprenant une arête (21),
dans laquelle le manche (10) comprend en outre :
une partie tubulaire droite (11) comprenant un remplissage, et
une partie tubulaire courbée (12),
**caractérisée en ce que** la partie tubulaire courbée (12) est creuse et une zone interne (a1) de la partie tubulaire courbée (12) creuse du manche (10) perpendiculaire à un axe central longitudinal (X1) de la partie tubulaire courbée (12) augmente vers la première extrémité de préhension (10a) du manche (10).

2. Hache selon la revendication 1, dans laquelle le remplissage est formé avec une partie de remplissage (13).

3. Hache selon la revendication 2, dans laquelle ladite partie de remplissage (13) est positionnée par rapport à la tête de hache (20) avec des éléments de positionnement de couplage (14), en particulier des éléments d'évidement/de saillie compatibles délimitant le mouvement relatif desdites parties.

4. Hache selon la revendication 2 ou 3, dans laquelle la partie de remplissage (13) est solide.

5. Hache selon l'une quelconque des revendications précédentes, dans laquelle la partie tubulaire courbée (12) comprend une section avec une épaisseur de paroi (t1) sensiblement constante.

6. Hache (1) selon l'une quelconque des revendications précédentes, dans laquelle l'arête (21) de la tête de hache (20) fait face à une direction de frappe de la hache et la partie tubulaire courbée (12) s'étend à partir de la partie tubulaire droite (11) sous la forme d'une courbe, vers la direction de frappe.

7. Hache selon la revendication 6, dans laquelle la ligne supérieure (16) de la partie tubulaire courbée (12) suit au moins partiellement une trajectoire circulaire.

8. Hache selon l'une quelconque des revendications précédentes, dans laquelle la seconde extrémité (10b) du manche (10) entoure partiellement la tête de hache (20) dans une direction longitudinale (X2) de la partie tubulaire droite (11) de la hache (1), de sorte qu'elle délimite le mouvement relatif desdites parties dans ladite direction longitudinale (X2).

9. Hache selon l'une quelconque des revendications précédentes, dans laquelle la partie tubulaire courbée comprend (12) une partie de surface (30).

10. Procédé pour fabriquer la hache (1) le procédé comprenant l'étape consistant à :
disposer (A) la tête de hache (20) dans un moule,
**caractérisé en ce que** le procédé comprend en outre les étapes consistant à :
disposer (B) un remplissage dans le moule pour entrer en contact avec la tête de hache (20),
disposer (C) un noyau courbé (15) dans le moule pour entrer en contact avec le remplissage,
introduire (D) une masse en fusion dans le moule afin de former un manche (10) en entourant le remplissage et le noyau courbé (15) et pour entourer partiellement la tête de hache (20) avec la masse en fusion, et
retirer (E) le noyau courbé (15) du manche (20) formé.

11. Procédé selon la revendication 10, comprenant les étapes consistant à :
utiliser une partie de remplissage (13) en tant que remplissage,
former la partie de remplissage (13) et la tête de hache (20) pour avoir des éléments de positionnement (14) compatibles, et
bloquer la partie de remplissage (13) sur la tête de hache avec les éléments de positionnement (14).

12. Procédé selon l'une des revendications 10 ou 11, comprenant les étapes consistant à :
former le noyau courbé (15) et le remplissage pour avoir des éléments de positionnement (17) compatibles, et
bloquer le noyau courbé (15) sur le remplissage pour positionner le noyau courbé (15) dans le moule.

13. Procédé selon l'une quelconque des revendications 10 à 12, comprenant l'étape consistant à :
dimensionner le moule et le noyau courbé (15) mutuellement pour obtenir une épaisseur de paroi (t1) constante dans au moins une partie de la partie tubulaire courbée (12).
